# EUROPÄISCHE PATENTSCHRIFT

(11) **EP 3 650 155 B1**
(45) Veröffentlichungstag und Bekanntmachung des Hinweises auf die Patenterteilung: **17.08.2022**
(21) Anmeldenummer: 18205526.9
(22) Anmeldetag: 09.11.2018
(51) Int. Cl.: B23K 9/028, B23K 9/095, B23K 9/16, B23K 37/02, G01N 21/00, B23K 101/06

(54) **ORBITALSCHWEISSVORRICHTUNG MIT VERBESSERTER RESTSAUERSTOFFMESSUNG**
ORBITAL WELDING DEVICE WITH IMPROVED RESIDUAL OXYGEN MEASURING
DISPOSITIF DE SOUDAGE ORBITAL À MESURE D'OXYGÈNE RÉSIDUEL AMÉLIORÉE

(43) Veröffentlichungstag der Anmeldung: 13.05.2020
(73) Patentinhaber: Illinois Tool Works Inc., Glenview, IL 60025 (US)
(72) Erfinder: TAMM, Markus, 88662 Überlingen (DE); FOH, Marcel, 88677 Markdorf (DE)
(74) Vertreter: HGF

(56) Entgegenhaltungen:
- DE-A1-102011 119 700
- DE-U1-202014 100 241
- GB-A- 1 537 236
- US-A1- 2012 140 234

## Beschreibung

Die Erfindung betrifft allgemein Orbitalschweißvorrichtungen mit Restsauerstoffmessung.

Der Stand der Technik WO 2014/130374 (der die Basis für den Oberbegriff von Anspruch 1 darstellt) zeigt eine Orbitalschweißvorrichtung, bei welcher ein optischer Sauerstoffsensor innerhalb des Gehäuses, welches eine Kammer für Schutzgas bildet, angeordnet ist, oder als Alternative außerhalb dieses Gehäuses, wobei dabei zusätzlich ein Ansauggerät vorhanden ist, welches mit der Kammer verbunden ist.

Aus der GB 1 537 236 A geht eine Orbitalschweißvorrichtung zum Verschweißen von Rohrenden hervor.

Die DE 20 2014 100 241 U1 betrifft eine Vorrichtung zum Messen und Sammeln von Sauerstoffkonzentrations-Daten bei Schweißprozessen, insbesondere beim Schutzgasschweißen. Zum Messen der Sauerstoffkonzentration kann ein optischer Sauerstoffsensor verwendet werden. Dieser kann problemlos bei hohen Temperaturen in unmittelbarer Umgebung der ausgeführten Schweißung Sauerstoffkonzentrations-Daten sammeln. Der Sauerstoffsensor kann in einer beliebigen Position innerhalb der Schweißkammer untergebracht sein, um die Sauerstoffkonzentration beim Schweißen zu messen. Diese Vorrichtung kann in einer Schweißanlage zum Orbitalschweißen eingesetzt werden.

In der US 2012/0140234 A1 ist eine Vorrichtung und ein Verfahren zum Messen von Verbrennungsparametern in der Verbrennungszone einer Gasturbine beschrieben. Hierbei wird Laserlicht zur Verbrennungszone gelenkt und das in der Verbrennungszone reflektierte Licht mit einem optischen Detektor erfasst und analysiert. Aus der DE 10 2011 119 700 A1 geht ein Verfahren zum Analysieren und Regeln eines Verbrennungsvorganges in einer Gasturbine hervor, bei dem Licht bei der Lichtquelle mittels eines Lichtleitfasersystems in eine Brennkammer geleitet wird und reflektiertes Licht erfasst wird und zu einem Detektor übertragen wird. Die Messung der Verbrennungsparameter kann durch Absorptionsspektroskopie ausgeführt werden.

Die Erfinder befanden als nachteilig, dass bei Anordnung des Sauerstoffsensors innerhalb des Gehäuses, welches eine Kammer für Schutzgas bildet, der Sauerstoffsensor aufgrund der Hitze des Schweißprozesses beschädigt werden kann. Bei einer Anordnung außerhalb des Gehäuses ist das Vorsehen eines Ansauggeräts umständlich und führt zu einer Messverzögerung.

Die der Erfindung zu Grunde liegende Aufgabe war es, diesen Nachteil zu verbessern. Die Aufgabe wird durch die Erfindung, insbesondere wie sie im unabhängigen Anspruch definiert ist, gelöst.

Insbesondere wird diese Aufgabe gelöst durch eine Orbitalschweißvorrichtung, wobei die Orbitalschweißvorrichtung eine Schweißstromquelle in einem Schweißstromquellengehäuse aufweist und einen von dem Schweißstromquellengehäuse separaten, an die Schweißstromquelle mittels eines Kabels angeschlossenen Orbitalschweißkopf, wobei der Orbitalschweißkopf eine Rohrhalterung und einen gegenüber der Rohrhalterung drehbar gelagerten Schweißelektrodenhalter zur Halterung der Schweißelektrode aufweist, wobei die Orbitalschweißvorrichtung einen, bevorzugt durch einen Motorcontroller der Orbitalschweißvorrichtung angesteuerten, elektrischen Motor aufweist, welcher eingerichtet ist, den Schweißelektrodenhalter anzutreiben und ihn so gegenüber der Rohrhalterung zu verdrehen, wobei der Orbitalschweißkopf oder das Kabel oder eine Gasleitung zum Orbitalschweißkopf oder die Orbitalschweißvorrichtung in oder an dem Schweißstromquellengehäuse einen optischen Sauerstoffsensor aufweist und der Orbitalschweißkopf eine Kammer für Schutzgas aufweist, welche eingerichtet ist, während eines Schweißprozesses eine Schweißelektrode des Orbitalschweißkopfes zu umgeben und nach außen hin im Wesentlichen abzuschließen, wobei der optische Sauerstoffsensor eingerichtet ist, eine Sauerstoffkonzentration in einem Messbereich in der

Kammer zu messen, wobei der Sauerstoffsensor außerhalb der Kammer angeordnet ist und der Sauerstoffsensor, bevorzugt eine lichtsensitive Fläche, z.B. einer Photodiode, des Sauerstoffsensors, über eine optische Kopplung optisch mit dem Messbereich gekoppelt ist.

Hierdurch ist der Sauerstoffsensor außerhalb der Kammer und somit geschützt am oder im Orbitalschweißkopf oder Kabel oder am oder im Schweißstromquellengehäuse angeordnet und gleichzeitig wird eine quasi verzögerungsfreie Messung ohne Ansauggerät ermöglicht. Bei Anordnung am oder im Kabel ist der Bereich nahe des Orbitalschweißkopfes bevorzugt. Bei Anordnung am oder im Kabel oder an oder in der Gasleitung oder am oder im Schweißstromquellengehäuse erfolgt die optische Kopplung bevorzugt über eine oder mehrere entlang des Kabels oder der Gasleitung geführte, zumindest bereichsweise angebundene, bevorzugt in den äußersten oder einen inneren Kabelmantel eingelegten, Lichtleiter, bevorzugt Glasfasern. Die Anordnung ist bevorzugt eine Befestigung derart, dass der Sauerstoffsensor für die vorgesehenen Sauerstoffmessungen dort verbleibt oder verbleiben kann. Die optische Kopplung ist ebenfalls bevorzugt integriert, so dass keine losen Lichtleiter separat handzuhaben sind.

Bevorzugt hat das Kabel eine Mindestlänge von 1 m, bevorzugt 2m, besonders bevorzugt 5m. Die Rohrhalterung ist bevorzugt eine zangenartige Klemmhalterung. Die Schweißstromquelle ist bevorzugt stationär, während der Orbitalschweißkopf manuell portabel ist.

Im Wesentlichen abgeschlossen bedeutet hinsichtlich der Kammer, dass auch Spalten oder kleine Öffnungen vorhanden sein können, welche jedoch so klein sind, dass sie der Ausbildung einer Schutzgasatmosphäre (bevorzugt mit weniger als 20 ppm, besonders bevorzugt weniger als 10 ppm Restsauerstoff) in der Kammer nicht entgegenstehen. Die Kammer ist bevorzugt derart ausgestaltet, dass die Rohrstücke, welche aneinandergeschweißt werden sollen, an den zu verbindenden Enden von der Kammer umschlossen sind. Die Kammer weist bevorzugt einen Eingang, z.B. mit einem Schlauchanschluss, für Schutzgas auf, mit welchem die Kammer somit gefüllt werden kann. Die vorher vorhandene Luft wird dabei dann durch die zuvor genannten kleinen Spalten oder Öffnungen aus der Kammer gedrängt.

Die Kammer kann auch einen dedizierten Gasausgang aufweisen.

Die Kammer ist bevorzugt derart gestaltet, dass die Schweißelektrode in der Kammer um die zu verschweißenden Rohrstücke gedreht werden kann.

Die lichtsensitive Fläche des Sauerstoffsensors ist bevorzugt die Fläche, an welcher Licht unter Benutzung des photoelektrischen Effekts in ein elektrisches Signal umgewandelt wird, z.B. die lichtsensitive Fläche einer Photodiode.

Bevorzugt weist der Orbitalschweißkopf ein Gehäuse auf, welches an die Kammer angrenzt und welches z.B. für einen Benutzer einen Griff oder ein Gehäuse für Bedien- oder Schaltelemente und/oder den Motor bildet, und der Sauerstoffsensor ist in oder an dem Gehäuse angeordnet.

Bei einer weiteren Orbitalschweißvorrichtung gemäß der Erfindung ist vorgesehen, dass die optische Kopplung zumindest teilweise durch eine Öffnung einer Wand der Kammer gebildet ist.

Hierdurch ist eine einfache Realisierung gegeben.

Der Sauerstoffsensor ist bevorzugt hinter der Wand der Kammer angeordnet und die lichtsensitive Fläche des Sauerstoffsensors ist auf die Öffnung gerichtet.

Besonders bevorzugt sind ein oder mehrere Spiegel im Strahlengang zwischen Öffnung und lichtsensitiver Fläche des Sauerstoffsensors angeordnet, so dass der Strahlengang um Ecken verlaufen kann, wodurch die Lage des Sauerstoffsensors flexibler gewählt werden kann. Bevorzugt ist die Öffnung durch ein Lichtleitelement verschlossen, z.B. ein Glasstück.

Bei einer weiteren Ausführungsform der Orbitalschweißvorrichtung ist vorgesehen, dass die optische Kopplung zumindest teilweise durch ein Lichtleitelement gebildet ist.

Hierdurch ist die Lage des Sauerstoffsensors noch flexibler wählbar.

Bei einer weiteren Ausführungsform der Orbitalschweißvorrichtung ist vorgesehen, dass das Lichtleitelement zumindest teilweise durch eine Glasfaser gebildet ist.

Hierdurch ist die Lage des Sauerstoffsensors bei sehr geringem Platzbedarf des Lichtleitelements noch flexibler wählbar.

Bevorzugt ist die Glasfaser, bevorzugt durch die Öffnung, auf den Messbereich gerichtet.

Bei einer weiteren Ausführungsform der Orbitalschweißvorrichtung ist vorgesehen, dass der Sauerstoffsensor, bevorzugt eine lichtsensitive Fläche, z.B. einer Photodiode, des Sauerstoffsensors, über eine weitere optische Kopplung optisch mit einem weiteren Messbereich in der Kammer gekoppelt ist.

Hierdurch wird die Zuverlässigkeit der Messung erhöht. Durch die Berücksichtigung verschiedener Messbereiche mittels eines Sensors wird quasi ein Mittelwert gebildet, welcher die Sauerstoffkonzentration in der Kammer besser repräsentiert.

Der weitere Messbereich kann Überlappungsbereiche mit dem ersten Messbereich aufweisen, ist jedoch insgesamt unterschiedlich.

Bevorzugt ist die optische Kopplung zumindest teilweise durch eine weitere Öffnung einer Wand der Kammer gebildet.

Bevorzugt ist die optische Kopplung zumindest teilweise durch ein weiteres Lichtleitelement gebildet.

Bevorzugt ist das weitere Lichtleitelement zumindest teilweise durch eine weitere Glasfaser gebildet, welche bevorzugt, bevorzugt durch die weitere Öffnung, auf den weiteren Messbereich gerichtet ist.

Bei einer weiteren Ausführungsform der Orbitalschweißvorrichtung ist vorgesehen, dass der Orbitalschweißkopf mindestens einen weiteren Sauerstoffsensor aufweist, wobei der weitere Sauerstoffsensor, bevorzugt eine lichtsensitive Fläche, z.B. einer Photodiode, des Sauerstoffsensors, über eine weitere optische Kopplung optisch mit einem weiteren Messbereich in der Kammer gekoppelt ist.

Hierdurch wird die Zuverlässigkeit und Genauigkeit der Messung erhöht, da nun eine örtliche Verteilung der Sauerstoffkonzentration in der Kammer messbar ist.

Der weitere Messbereich kann Überlappungsbereiche mit dem ersten Messbereich aufweisen, ist jedoch insgesamt unterschiedlich.

Bevorzugt ist die optische Kopplung zumindest teilweise durch eine weitere Öffnung einer Wand der Kammer gebildet.

Bevorzugt ist die optische Kopplung zumindest teilweise durch ein weiteres Lichtleitelement gebildet.

Bevorzugt ist das weitere Lichtleitelement zumindest teilweise durch eine weitere Glasfaser gebildet, welche bevorzugt, bevorzugt durch die weitere Öffnung, auf den weiteren Messbereich gerichtet ist.

Bei einer weiteren Ausführungsform der Orbitalschweißvorrichtung ist vorgesehen, dass die Orbitalschweißvorrichtung, bevorzugt der Orbitalschweißkopf eine elektrische Regeleinrichtung aufweist, welche eingerichtet ist, einen Schweißprozess zu starten, sobald die Sauerstoffkonzentration in einem oder mehreren der Messbereiche einen vorbestimmten Schwellwert unterschritten hat.

Hierdurch wird eine Zeitersparnis für den Schweißprozess erreicht. Üblicherweise wird im Stand der Technik, der Schweißprozess nach einer vorbestimmten Zeit gestartet, nachdem das Schutzgas in die Kammer geleitet wurde, wobei die vorbestimmte Zeit so großzügig bemessen ist, dass die Sauerstoffkonzentration mit hoher Sicherheit klein genug ist, so dass es vorkommt, dass unnötig lange gewartet wird.

Die Erfindung soll nun anhand von Zeichnungen beispielhaft weiter veranschaulicht werden.

Hierbei zeigen:
Fig. 1 eine erste Ausführungsform einer erfindungsgemäßen Vorrichtung,
Fig. 2 basierend auf der ersten Ausführungsform eine zweite Ausführungsform einer erfindungsgemäßen Vorrichtung,
Fig. 3 basierend auf der zweiten Ausführungsform eine dritte Ausführungsform einer erfindungsgemäßen Vorrichtung,
Fig. 4 basierend auf der dritten Ausführungsform eine vierte Ausführungsform einer erfindungsgemäßen Vorrichtung.

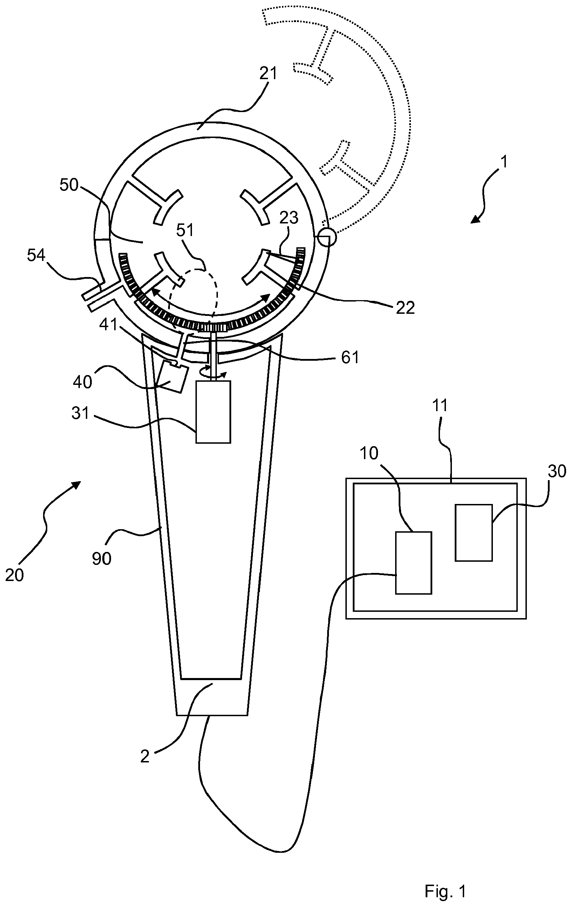

Es folgt eine detailliertere Beschreibung von Fig. 1. Die Ausgestaltung ist derart, dass die Orbitalschweißvorrichtung 1 eine Schweißstromquelle 10 in einem Schweißstromquellengehäuse 11 aufweist und einen von dem Schweißstromquellengehäuse 11 separaten, an die Schweißstromquelle 10 mittels eines Kabels 2 angeschlossenen Orbitalschweißkopf 20, wobei der Orbitalschweißkopf 20 eine Rohrhalterung 21 und einen gegenüber der Rohrhalterung 21 drehbar gelagerten Schweißelektrodenhalter 22 zur Halterung der Schweißelektrode 23 aufweist, wobei die Orbitalschweißvorrichtung 1 einen, hier durch einen Motorcontroller 30 der Orbitalschweißvorrichtung 1 angesteuerten, elektrischen Motor 31 aufweist, welcher eingerichtet ist, den Schweißelektrodenhalter 22 anzutreiben und ihn so gegenüber der Rohrhalterung 21 zu verdrehen, wobei der Orbitalschweißkopf 20 einen optischen Sauerstoffsensor 40 und eine Kammer 50 für Schutzgas aufweist, welche eingerichtet ist, während eines Schweißprozesses eine Schweißelektrode 23 des Orbitalschweißkopfes 20 zu umgeben und nach außen hin im Wesentlichen abzuschließen, wobei der optische Sauerstoffsensor 40 eingerichtet ist, eine Sauerstoffkonzentration in einem Messbereich 51 in der Kammer 50 zu messen, wobei der Sauerstoffsensor 40 außerhalb der Kammer 50 angeordnet ist und der Sauerstoffsensor 40, hier eine lichtsensitive Fläche 41, z.B. einer Photodiode, des Sauerstoffsensors 40, über eine optische Kopplung optisch mit dem Messbereich 51 gekoppelt ist. Die Rohrhalterung 21 ist per Klappmechanismus schließbar. Hier hat das Kabel 2 eine Mindestlänge von 2m. Die Kammer 50 ist hier derart ausgestaltet, dass die Rohrstücke, welche aneinandergeschweißt werden sollen, an den zu verbindenden Enden von der Kammer 50 umschlossen sind. Die Kammer 50 weist hier einen Eingang 54, z.B. mit einem Schlauchanschluss, für Schutzgas auf, mit welchem die Kammer somit gefüllt werden kann. Die Kammer 50 ist hier derart gestaltet, dass die Schweißelektrode 23 in der Kammer 50 um die zu verschweißenden Rohrstücke gedreht werden kann. Die lichtsensitive Fläche 41 des Sauerstoffsensors 40 ist hier eine Photodiode. Hier weist der Orbitalschweißkopf 20 ein Gehäuse 90 auf, welches an die Kammer 50 angrenzt und welches z.B. für einen Benutzer einen Griff und ein Gehäuse für den Motor 31 bildet, und der Sauerstoffsensor 40 ist in dem Gehäuse 90 angeordnet. Die Ausgestaltung ist derart, dass die optische Kopplung zumindest teilweise durch eine Öffnung 61 einer Wand der Kammer 50 gebildet ist. Der Sauerstoffsensor 40 ist hier hinter der Wand der Kammer 50 angeordnet und die lichtsensitive Fläche 41 des Sauerstoffsensors 40 ist auf die Öffnung 61 gerichtet.

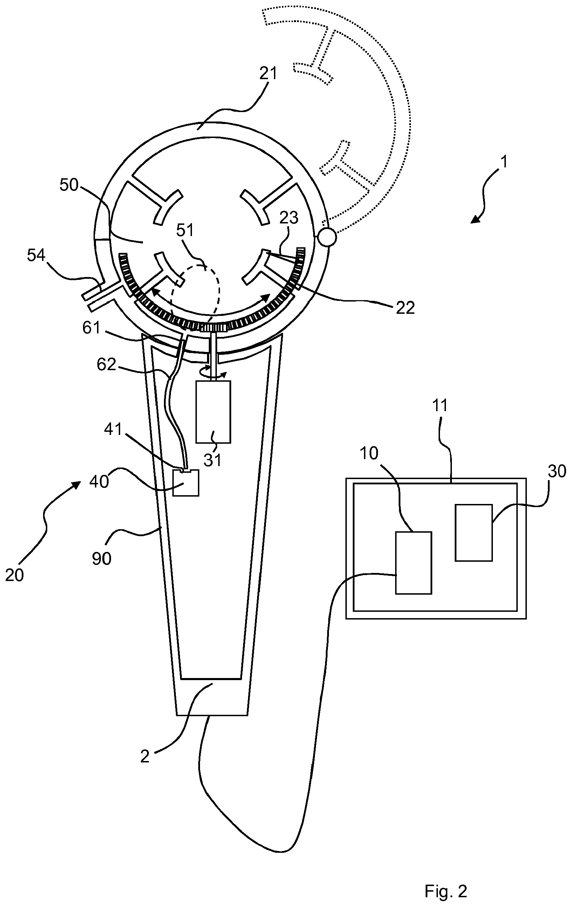

Es folgt eine detailliertere Beschreibung von Fig. 2. Die Ausgestaltung ist derart, dass die optische Kopplung zumindest teilweise durch ein Lichtleitelement 60 gebildet ist, anders als in Fig. 1. Die Ausgestaltung ist derart, dass das Lichtleitelement 60 zumindest teilweise durch eine Glasfaser 62 gebildet ist.

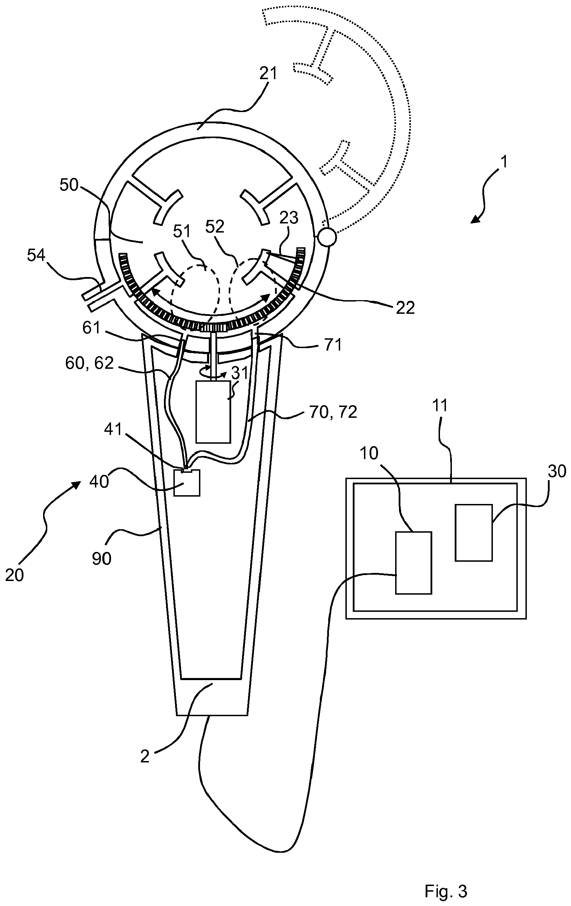

Es folgt eine detailliertere Beschreibung von Fig. 3. Die Ausgestaltung ist derart, dass der Sauerstoffsensor 40, hier die lichtsensitive Fläche 41 des Sauerstoffsensors 40, über eine weitere optische Kopplung optisch mit einem weiteren Messbereich 52 in der Kammer 50 gekoppelt ist, anders als in Fig. 2. Hier ist die optische Kopplung zumindest teilweise durch eine weitere Öffnung 71 einer Wand der Kammer 50 gebildet. Hier ist die optische Kopplung zumindest teilweise durch ein weiteres Lichtleitelement 70 gebildet. Hier ist das weitere Lichtleitelement 70 zumindest teilweise durch eine weitere Glasfaser 72 gebildet, welche durch die weitere Öffnung 71 auf den weiteren Messbereich 52 gerichtet ist.

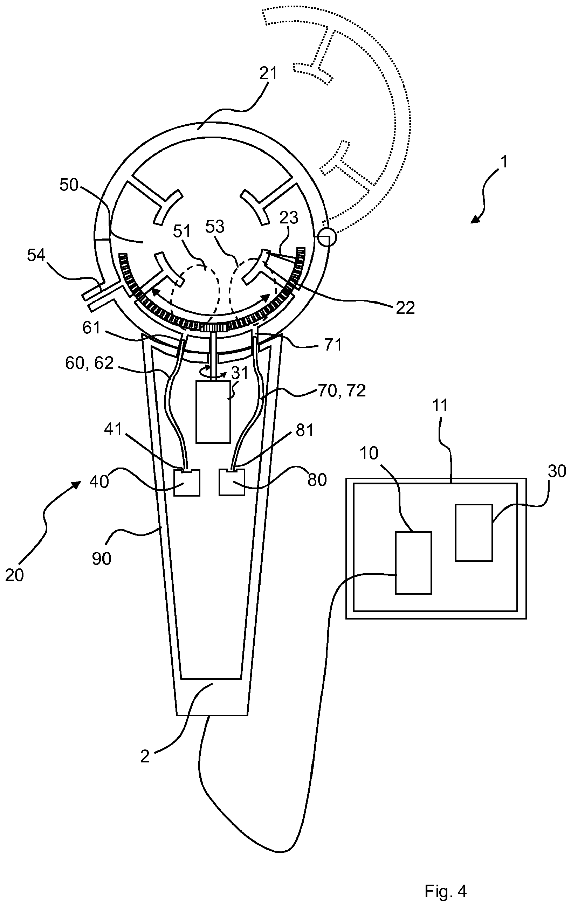

Es folgt eine detailliertere Beschreibung von Fig. 4. Die Ausgestaltung ist derart, dass der Orbitalschweißkopf 20 mindestens einen weiteren Sauerstoffsensor 80 aufweist, wobei der weitere Sauerstoffsensor 80, hier eine lichtsensitive Fläche 81, z.B. einer Photodiode, des Sauerstoffsensors 80, über eine weitere optische Kopplung optisch mit einem weiteren Messbereich 53 in der Kammer 50 gekoppelt ist, anders als in Fig. 3. Der weitere Messbereich kann Überlappungsbereiche mit dem ersten Messbereich aufweisen, ist jedoch insgesamt unterschiedlich. Hier ist die optische Kopplung zumindest teilweise durch eine weitere Öffnung 71 einer Wand der Kammer 50 gebildet. Hier ist die optische Kopplung zumindest teilweise durch ein weiteres Lichtleitelement 70 gebildet. Hier ist das weitere Lichtleitelement 70 zumindest teilweise durch eine weitere Glasfaser 72 gebildet, welche durch die weitere Öffnung 71 auf den weiteren Messbereich 53 gerichtet ist.

### Bezugszeichen

- 1: Orbitalschweißvorrichtung
- 2: Kabel
- 10: Schweißstromquelle
- 11: Schweißstromquellengehäuse
- 20: angeschlossener Orbitalschweißkopf
- 21: Rohrhalterung
- 22: gelagerter Schweißelektrodenhalter
- 23: Schweißelektrode
- 30: Motorcontroller
- 31: elektrischer Motor
- 40: optischer Sauerstoffsensor
- 41: lichtsensitive Fläche
- 50: abgeschlossene Kammer
- 51: Messbereich
- 52: weiterer Messbereich
- 53: weiterer Messbereich
- 54: Eingang
- 60: Lichtleitelement
- 61: Öffnung
- 62: Glasfaser
- 70: weiteres Lichtleitelement
- 71: weitere Öffnung
- 72: weitere Glasfaser
- 80: weiterer Sauerstoffsensor
- 81: lichtsensitive Fläche
- 90: Gehäuse

## Patentansprüche

1. Orbitalschweißvorrichtung (1), wobei die Orbitalschweißvorrichtung (1) eine Schweißstromquelle (10) in einem Schweißstromquellengehäuse (11) aufweist und einen von dem Schweißstromquellengehäuse (11) separaten, an die Schweißstromquelle (10) mittels eines Kabels (2) angeschlossenen Orbitalschweißkopf (20), wobei der Orbitalschweißkopf (20) eine Rohrhalterung (21) und einen gegenüber der Rohrhalterung (21) drehbar gelagerten Schweißelektrodenhalter (22) zur Halterung der Schweißelektrode (23) aufweist, wobei die Orbitalschweißvorrichtung (1) einen elektrischen Motor (31) aufweist, welcher eingerichtet ist, den Schweißelektrodenhalter (22) anzutreiben und ihn so gegenüber der Rohrhalterung (21) zu verdrehen, wobei der Orbitalschweißkopf (20) oder das Kabel (2) oder eine Gasleitung zum Orbitalschweißkopf (20) oder die Orbitalschweißvorrichtung (1) in oder an dem Schweißstromquellengehäuse (11) einen optischen Sauerstoffsensor (40) aufweist und der Orbitalschweißkopf (20) eine Kammer (50) für Schutzgas aufweist, welche eingerichtet ist, während eines Schweißprozesses eine Schweißelektrode (23) des Orbitalschweißkopfes (20) zu umgeben und nach außen hin im Wesentlichen abzuschließen, wobei der optische Sauerstoffsensor (40) eingerichtet ist, eine Sauerstoffkonzentration in einem Messbereich (51) in der Kammer (50) zu messen,
**dadurch gekennzeichnet, dass** der Sauerstoffsensor (40) außerhalb der Kammer (50) angeordnet ist und der Sauerstoffsensor (40) über eine optische Kopplung optisch mit dem Messbereich (51) gekoppelt ist.

2. Orbitalschweißvorrichtung (1) nach Anspruch 1, wobei die optische Kopplung zumindest teilweise durch eine Öffnung (61) einer Wand der Kammer (50) gebildet ist.

3. Orbitalschweißvorrichtung (1) nach einem der Ansprüche 1 bis 2, wobei die optische Kopplung zumindest teilweise durch ein Lichtleitelement (60) gebildet ist.

4. Orbitalschweißvorrichtung (1) nach Anspruch 3, wobei das Lichtleitelement (60) zumindest teilweise durch eine Glasfaser (62) gebildet ist.

5. Orbitalschweißvorrichtung (1) nach einem der Ansprüche 1 bis 4, wobei der Sauerstoffsensor (40) über eine weitere optische Kopplung optisch mit einem weiteren Messbereich (52) in der Kammer (50) gekoppelt ist.

6. Orbitalschweißvorrichtung (1) nach einem der Ansprüche 1 bis 5, wobei der Orbitalschweißkopf (20) mindestens einen weiteren Sauerstoffsensor (80) aufweist, wobei der weitere Sauerstoffsensor (80) über eine weitere optische Kopplung optisch mit einem weiteren Messbereich (53) in der Kammer (50) gekoppelt ist.

7. Orbitalschweißvorrichtung (1) nach einem der Ansprüche 1 bis 6, wobei die Orbitalschweißvorrichtung (1), bevorzugt der Orbitalschweißkopf (20), eine elektrische Regeleinrichtung aufweist, welche eingerichtet ist, einen Schweißprozess zu starten, sobald die Sauerstoffkonzentration in einem oder mehreren der Messbereiche (51, 52, 53) einen vorbestimmten Schwellwert unterschritten hat.

## Claims

1. An orbital welding device (1), wherein the orbital welding device (1) comprises a welding current source (10) in a welding current source housing (11) and an orbital welding head (20) which is separate from the welding current source housing (11) and is connected to the welding current source (10) by means of a cable (2), wherein the orbital welding head (20) comprises a pipe mount (21) and a welding electrode holder (22) which is mounted such that it can rotate relative to the pipe mount (21) and is intended for holding the welding electrode (23), wherein the orbital welding device (1) comprises an electric motor (31) which is configured to drive the welding electrode holder (22) and thus rotate it with respect to the pipe mount (21), wherein the orbital welding head (20) or the cable (2) or a gas line to the orbital welding head (20) or the orbital welding device (1) comprises an optical oxygen sensor (40) in or on the welding current source housing (11) and the orbital welding head (20) comprises a chamber (50) for shielding gas which is configured to surround the welding electrode (23) of the orbital welding head (20) and substantially seal it off from the outside during a welding process, wherein the optical oxygen sensor (40) is configured to measure an oxygen concentration in a measuring region (51) in the chamber (50), **characterized in that** the oxygen sensor (40) is disposed outside the chamber (50) and the oxygen sensor (40) is optically coupled to the measuring region (51) via an optical coupling.

2. The orbital welding device (1) according to Claim 1, wherein the optical coupling is at least partially formed by an opening (61) of a wall of the chamber (50).

3. The orbital welding device (1) according to any one of Claims 1 to 2, wherein the optical coupling is at least partially formed by a light-guiding element (60).

4. The orbital welding device (1) according to Claim 3, wherein the light-guiding element (60) is at least partially formed by an optical fiber (62).

5. The orbital welding device (1) according to any one of Claims 1 to 4, wherein the oxygen sensor (40) is optically coupled to a further measuring region (52) in the chamber (50) via a further optical coupling.

6. The orbital welding device (1) according to any one of Claims 1 to 5, wherein the orbital welding head (20) comprises at least one further oxygen sensor (80), wherein the further oxygen sensor (80) is optically coupled to a further measuring region (53) in the chamber (50) via a further optical coupling.

7. The orbital welding device (1) according to any one of Claims 1 to 6, wherein the orbital welding device (1), preferably the orbital welding head (20), comprises an electrical control device which is configured to start a welding process as soon as the oxygen concentration in one or more of the measuring regions (51, 52, 53) has fallen below a predetermined threshold value.

## Revendications

1. Dispositif de soudage orbital (1), dans lequel le dispositif de soudage orbital (1) comprend une source de courant de soudage (10) dans un logement de source de courant de soudage (11) et une tête de soudage orbital (20) qui est séparée du logement de source de courant de soudage (11) et est connectée à la source de courant de soudage (10) au moyen d'un câble (2), dans lequel la tête de soudage orbital (20) comprend une monture de tuyau (21) et un support d'électrode de soudage (22) qui est monté de sorte qu'il peut tourner par rapport à la monture de tuyau (21) et est destiné au maintien de l'électrode de soudage (23), dans lequel le dispositif de soudage orbital (1) comprend un moteur électrique (31) qui est configuré pour entraîner le support d'électrode de soudage (22) et le faire tourner ainsi par rapport au support de tuyau (21), dans lequel la tête de soudage orbital (20) ou le câble (2) ou une conduite de gaz vers la tête de soudage orbital (20) ou le dispositif de soudage orbital (1) comprend un capteur d'oxygène optique (40) dans ou sur le logement de source de courant de soudage (11) et la tête de soudage orbital (20) comprend une chambre (50) pour le gaz de protection qui est configurée pour entourer l'électrode de soudage (23) de la tête de soudage orbital (20) et l'isoler sensiblement de l'extérieur durant un processus de soudage, dans lequel le capteur d'oxygène optique (40) est configuré pour mesurer une concentration en oxygène dans une zone de mesure (51) dans la chambre (50), **caractérisé en ce que** le capteur d'oxygène (40) est disposé à l'extérieur de la chambre (50) et le capteur d'oxygène (40) est couplé optiquement à la zone de mesure (51) via un couplage optique.

2. Dispositif de soudage orbital (1) selon la revendication 1, dans lequel le couplage optique est au moins partiellement formé par une ouverture (61) d'une paroi de la chambre (50).

3. Dispositif de soudage orbital (1) selon l'une quelconque des revendications 1 à 2, dans lequel le couplage optique est au moins partiellement formé par un élément de guidage de lumière (60).

4. Dispositif de soudage orbital (1) selon la revendication 3, dans lequel l'élément de guidage de lumière (60) est au moins partiellement formé par une fibre optique (62) .

5. Dispositif de soudage orbital (1) selon l'une quelconque des revendications 1 à 4, dans lequel le capteur d'oxygène (40) est couplé optiquement à une zone de mesure supplémentaire (52) dans la chambre (50) via un couplage optique supplémentaire.

6. Dispositif de soudage orbital (1) selon l'une quelconque des revendications 1 à 5, dans lequel la tête de soudage orbital (20) comprend au moins un capteur d'oxygène supplémentaire (80), dans lequel le capteur d'oxygène supplémentaire (80) est couplé optiquement à une zone de mesure supplémentaire (53) dans la chambre (50) via un couplage optique supplémentaire.

7. Dispositif de soudage orbital (1) selon l'une quelconque des revendications 1 à 6, dans lequel le dispositif de soudage orbital (1), de préférence la tête de soudage orbital (20), comprend un dispositif de commande électrique qui est configuré pour démarrer un processus de soudage dès que la concentration en oxygène dans une ou plusieurs parmi les zones de mesure (51, 52, 53) est tombée en dessous d'une valeur seuil prédéterminée.
